# EUROPEAN PATENT SPECIFICATION

(11) **EP 2 492 157 B1**
(45) Date of publication and mention of the grant of the patent: **09.04.2014**
(21) Application number: 11156168.4
(22) Date of filing: 28.02.2011
(51) Int. Cl.: B60R 22/18

(54) **Seat belt assembly**
Sitzgurtanordnung
Ensemble de ceinture de sécurité

(43) Date of publication of application: 29.08.2012
(73) Proprietor: Volvo Car Corporation, 40 531 Göteborg (SE)
(72) Inventor: Aldeborg, Gert, 45197, Uddevalla (SE); Adolfsson, Peter, 42244, Hisings Backa (SE)
(74) Representative: Kraenzmer, Martin

(56) References cited:
- EP-A2- 0 374 893
- GB-A- 2 438 529
- JP-A- 1 229 744
- US-B2- 7 331 610

## Description

### TECHNICAL FIELD

The present disclosure relates to a safety belt system for a seat according to the preamble of claim 1. Furthermore, the present disclosure relates to a safety belt system for a seat according to the preamble of claim 7. Moreover, the present disclosure relates to a seat assembly and to a vehicle. Further, the present disclosure relates to a method for arranging a safety belt in a pre-crash configuration according to the preamble of claim 12. The document US 7 331 610 discloses a device and method according to the preambles of these independent claims.

### BACKGROUND

Vehicle seats of today, such as seats for cars, lorries, aeroplanes etcetera, are often furnished with one or more safety belt systems. Generally, a front seat of a vehicle is provided with one safety belt system whereas a vehicle back seat may be provided with a plurality of seat belt systems.

Nowadays, safety belt systems also often comprise a reversible safety belt tensioner adapted to reversibly tension the belt of the safety belt system in the event of an impending crash. The purpose of the reversible tensioning may be to position an occupant of the seat in a suitable pre-crash position and/or to arrange the safety belt in a suitable safety belt configuration prior to the possible crash. Moreover, the reversible tensioning of the safety belt may be used for communicating to the occupant that the vehicle may be about to be involved in a collision.

US 7,331,610 for instance teaches that a safety belt system may be furnished with a deflecting element which is adapted to be pushed upwards, i.e. in a vertical direction, to tighten the seat belt before an accident. However, although the '610 safety belt system implies that the belt of the system may be tensioned prior to a possible crash, the '610 system does not necessarily result in a suitable safety belt configuration being obtained prior to the possible crash. Moreover, it may be difficult to adjust the '610 safety belt system so as to meet the requirements of different types of seat occupants.

### SUMMARY

One object is to reduce or ameliorate at least one of the disadvantages of the prior art, or to provide a useful alternative.

This object is achieved by a safety belt system according to claim 1.

As such, a first aspect of the present disclosure relates to a safety belt system for a vehicle seat. The vehicle seat has a vertical extension in a vertical direction and a transversal centre plane which, when a person occupies the vehicle seat, extends vertically between the occupant's left and right hand sides.

The safety belt system comprises a belt, a first guide arrangement and a second guide arrangement. Moreover, the safety belt system is configured such that when the safety belt system is mounted with the vehicle seat, the first and second guide arrangements are located on the same side of the transversal centre plane and the first guide arrangement is located above the second guide arrangement.

As used herein, the expression "guide arrangement" is an arrangement of the safety belt system to which a portion of the belt is attached and/or at which a portion of the safety belt deflects, i.e. changes direction. However, in preferred embodiments of the safety belt system of the present disclosure, the expression "guide arrangement" encompasses only arrangements at which a portion of the safety belt deflects.

The system further comprises a transversal direction which is perpendicular to the transversal centre plane and extends from the first guide arrangement towards the transversal centre plane. Furthermore, the system comprises a backward direction extending from the first guide arrangement in a direction perpendicular to both the vertical direction and the transversal direction such that the vertical direction, the transversal direction and the backward direction together form a right-handed system.

As used herein, the expression "right-handed system" relates to a system which satisfies the right-hand rule, viz the directions obtained if the thumb, index finger and middle finger of the right hand are held so that they form three right angles. As such, for the above three directions, the thumb may indicate the vertical direction, the index finger the backward direction and the middle finger the transversal direction.

The system further comprises a pre-crash sensor which is adapted to emit a crash situation signal which is indicative of the vehicle being subjected to an impending crash situation, the safety belt system further comprising a reversible safety belt tensioner adapted to reversibly tension the belt in response to the pre-crash sensor emitting the crash situation signal.

According to the first aspect of the present disclosure, the first guide arrangement is configured such that it allows at least a belt portion of the belt, which belt portion is in contact with the first guide arrangement, to be reversibly displaced in a direction at least partially coinciding with the transversal direction and/or the backward direction when the reversible safety belt tensioner tensions the belt.

As such, the safety belt system according to the above implies that the safety belt may be arranged in a suitable crash configuration before the vehicle hosting the safety belt system is actually involved in a crash. Moreover, the feature that at least the belt portion which is in contact with the first guide arrangement is displaced horizontally, and in particular in a direction which at least partially coincides with the transversal direction and/or the backward direction, implies that the safety belt may assume a configuration which may preferably be used if the safety belt is tensioned by a pretensioner, e.g. during an actual crash.

If the detected impending crash is however avoided, the first guide arrangement may assume its initial position such that the safety belt may assume a suitable comfort configuration.

According to the present disclosure, the first guide arrangement may comprise a first guide point and may be configured such that the first guide point is displaced together with a belt portion of the belt when the safety belt tensioner tensions the belt.

According to the present disclosure, the first guide arrangement may comprise a resilient means adapted to allow the displacement of the first guide point when the reversible safety belt tensioner tensions the belt.

The use of a resilient means results in an advantageous implementation of the first guide means and implies that the first guide arrangement may reassume a position corresponding to a comfort configuration of the safety belt system when the reversible seat belt tensioner has been deactivated.

According to the present disclosure, the first guide arrangement may be adapted to pivot to thereby achieve the displacement of the first guide point when the safety belt tensioner tensions the belt. The resilient means may comprise a torsion spring.

According to the present disclosure, the first guide arrangement may comprise a slot having an extension in at least a direction perpendicular to the transversal centre plane which extension is at least 2 times, preferably 3 times, greater than the width of the belt.

A second aspect of the present disclosure relates to a safety belt system for a vehicle seat. The vehicle seat has a vertical extension in a vertical direction and a transversal centre plane which, when a person occupies the vehicle seat, extends vertically between the occupant's left and right hand sides.

The safety belt system comprises a belt, a first guide arrangement and a second guide arrangement. Moreover, the safety belt system is configured such that when the safety belt system is mounted with the vehicle seat, the first and second guide arrangements are located on the same side of the transversal centre plane and the first guide arrangement is located above the second guide arrangement.

The system further comprises a transversal direction being perpendicular to the transversal centre plane and extending from the first guide arrangement towards the transversal centre plane. Furthermore, the system comprises a backward direction extending from the first guide arrangement in a direction perpendicular to both the vertical direction and the transversal direction such that vertical direction, the transversal direction and the backward direction together form a right-handed system.

The system further comprises a pre-crash sensor which is adapted to emit a crash situation signal which is indicative of the vehicle being subjected to an impending crash situation.

Moreover, the safety belt system comprises a guide actuator which is adapted to displace at least a belt portion of the belt, which belt portion is in contact with the first guide arrangement, in a direction at least partially coinciding with the transversal direction and/or the backward direction in response to the pre-crash sensor emitting the crash situation signal.

The feature that the safety belt system may comprise a guide actuator indicates that the measures of a possible reversible tensioning and the reversible displacement, respectively, of the safety belt may be carried out by separate components of the safety belt system. Moreover, the guide actuator may in some embodiments of the present invention also be used to reversibly pre-tension the safety belt such that the reversible safety belt tensioner may be omitted.

According to the present disclosure, the first guide arrangement may comprise a first guide point and may be configured such that the first guide point is displaced together with a belt portion of the belt when the safety belt tensioner tensions the belt.

According to the present disclosure, the first guide arrangement may comprise a lever and the first guide point may be being connected to the lever. Moreover, the guide actuator may be adapted to pivot the lever in response to the pre-crash sensor emitting the crash situation signal.

A safety belt system in which the first guide arrangement comprises a lever which the guide actuator is adapted to pivot implies that the first guide arrangement may be made rather compact and thus not require much space for e.g. installation or use. This is advantageous since the first guide arrangement is often located in a position in a vehicle with limited space.

According to the present disclosure, the safety belt system according to the first and/or second aspects of the present disclosure may further comprise a third guide arrangement, the safety belt system being configured such that when the safety belt system is mounted with a seat, the third guide arrangement is located on the opposite side of the transversal centre plane compared to the first and second guide arrangements.

A third aspect of the present disclosure relates to a vehicle seat assembly, comprising a seat and a safety belt system according to the first and/or second aspects of the present disclosures.

A fourth aspect of the present disclosure relates to a vehicle, comprising a vehicle seat assembly according to the third aspect of the present invention and/or a safety belt system according to the first and/or second aspects of the present disclosures.

A fifth aspect of the present disclosure method relates to a method for arranging a safety belt in a pre-crash configuration. The safety belt forms a part of a safety belt system for a seat, which seat is occupied by an occupant and located in or on a vehicle. The vehicle seat has a vertical extension and a transversal centre plane which extends vertically between the occupant's left and right hand sides. Furthermore, the safety belt system comprises a first guide arrangement and a second guide arrangement.

The safety belt system is configured such that the first and second guide arrangements are located on the same side of the transversal centre plane and the first guide arrangement is located above the second guide arrangement.

The system further comprises a transversal direction being perpendicular to the transversal centre plane and extending from the first guide arrangement towards the transversal centre plane. Furthermore, the system comprises a backward direction extending from the first guide arrangement in a direction perpendicular to both the vertical direction and the transversal direction such that vertical direction, the transversal direction and the backward direction together form a right-handed system. Moreover, the system comprises a pre-crash sensor.

The method comprises the steps of:
- determining that the vehicle is subjected to an impending collision using the pre-crash sensor, and
- when the pre-crash sensor has determined that the vehicle is subjected to an impending crash situation: reversibly displacing at least a belt portion of the belt, which belt portion is in contact with the first guide arrangement, in a direction at least partially coinciding with the transversal direction and/or the backward direction.

According to the present disclosure, a belt portion may be displaced at least partially towards the transversal centre plane.

According to the present disclosure, method according may further comprise the step of:
- when the pre-crash sensor has determined that the vehicle will be involved in an impending collision: actuating the safety belt tensioner to reversibly tension the safety belt.

### BRIEF DESCRIPTION OF THE DRAWINGS

The present invention will hereinafter be explained in greater detail by means of nonlimiting examples and with reference to the appended drawings in which:
- Fig. 1: discloses an embodiment of the present invention in a comfort configuration;
- Fig. 2: discloses the Fig. 1 embodiment in a pre-crash configuration;
- Fig. 3: discloses a portion of the Fig. 1 embodiment, as seen from above;
- Fig. 4a - 4b: discloses a portion of another embodiment of the present invention;
- Fig. 5a - 5c: discloses a portion of a further embodiment of the present invention;
- Fig. 6a - 6b: discloses a portion of another embodiment of the present invention;
- Fig. 7a - 7b: discloses a portion of a further embodiment of the present invention;
- Fig. 8a - 8b: discloses a portion of another embodiment of the present invention;
- Fig. 9a - 9c: discloses a portion of further embodiments of the present invention, and
- Fig. 10: discloses an embodiment, namely a four point safety belt system, of the present invention in a comfort configuration.

It should be noted that the appended drawings are not necessarily drawn to scale and that the dimensions of some features of the present invention may have been exaggerated for the sake of clarity.

### DETAILED DESCRIPTION OF PREFERRED EMBODIMENTS

The invention will, in the following, be exemplified by embodiments. It is to be understood, however, that the embodiments are included in order to explain principles of the invention and not to limit the scope of the invention defined by the appended claims.

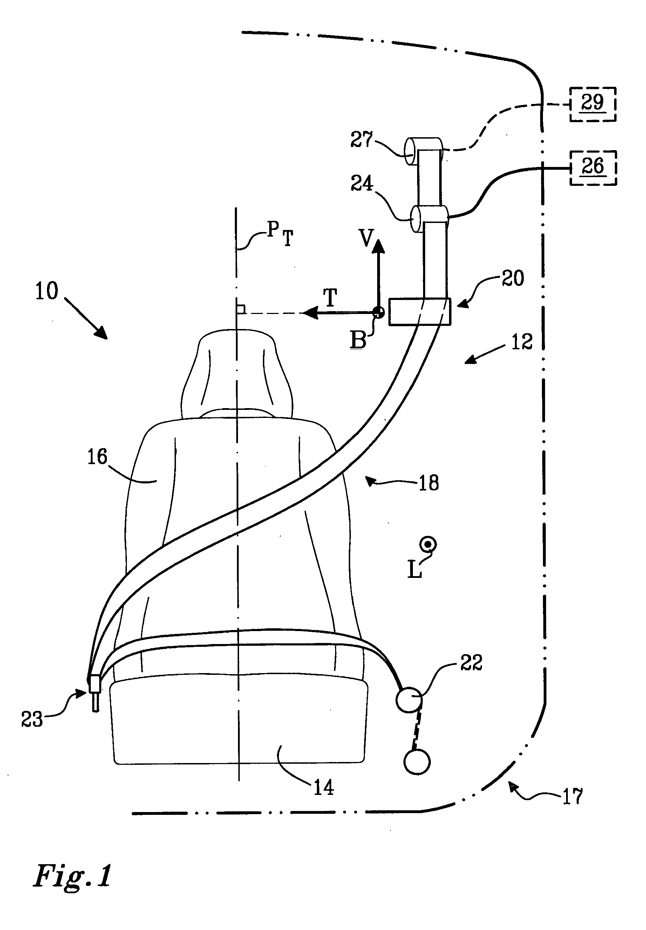

Fig. 1 illustrates a seat 10 provided with an embodiment of a safety belt system 12 according to the present invention. The seat 10 comprises a squab portion 14 and a backrest portion 16. The seat 10 has a vertical extension in a vertical direction V and a transversal extension in a transversal direction T. As may be gleaned from Fig. 1, the vertical direction V extends from the squab portion 14 towards the backrest portion 16 of the seat 10. The seat 10 and the safety belt system 12 are preferably located in a vehicle 17 such as a car.

Moreover, the seat 10 has a vertically extending transversal centre plane P_{T} which, when a person occupies the seat, extends between the occupant's left and right hand sides. The seat 10 also has a longitudinal extension in a longitudinal direction L which extension is perpendicular to both the vertical direction V and the transversal extension T.

When the seat 10 is mounted in a vehicle 17, the longitudinal extension L generally coincides with the intended direction of travel of the vehicle. In such an implementation of the seat 10, the transversal centre plane P_{T} extends in a vertical direction and in the intended direction of travel of the vehicle.

As may be gleaned from Fig. 1, the safety belt system 12 comprises a belt 18, a first guide arrangement 20 and a second guide arrangement 22. Moreover, the safety belt system 12 is configured such that when the safety belt system 12 is mounted with a seat 10, the first and second guide arrangements 20, 22 are located on the same side of the transversal centre plane P_{T} and the first guide arrangement 20 is located above - i.e. on a higher level in the vertical direction V than - the second guide arrangement 22.

Fig. 1 further illustrates that the transversal direction T is perpendicular to the transversal centre plane P_{T} and extends in a direction from the first guide arrangement 20 towards the transversal centre plane P_{T}. Moreover, Fig. 1 also illustrates that the system 12 comprises a backward direction B extending from the first guide arrangement 20 in a direction perpendicular to both the vertical direction V and the transversal direction T such that vertical direction V, the transversal direction T and the backward direction B together form a right-handed system.

As may be realized from Fig. 1, the backward direction B is generally the inverse direction of the longitudinal extension L. As such, when the seat 10 is mounted in a vehicle 17, the backward direction B generally is the inverse direction of the intended direction of travel of the vehicle.

The first guide arrangement 20 may be attached to the seat 10 or a component of the vehicle 17 in which the seat 10 is located. Purely by way of example, the first guide arrangement 20 may be attached to a pillar (not shown), such as a B or C pillar, of a vehicle.

Moreover, the Fig. 1 embodiment of the present invention comprises a third guide arrangement 23 and the illustrated safety belt system 12 is configured such that when the safety belt system is mounted with a seat 10, the third guide arrangement 23 is located on the opposite side of the transversal centre plane P_{T} as compared to the first and second guide arrangements 20, 22.

Further, the safety belt system 12 may further comprise a safety belt tensioner 24 adapted to reversibly tension the belt 18 in the event of an impending crash. However, in other embodiments of the present invention, the safety belt tensioner 24 may be omitted.

The purpose of the reversible tensioning is *inter alia* to position an occupant of the seat in a suitable crash position and/or to position the safety belt in a suitable safety belt configuration prior to, or at least during the initial portion of, the possible crash. Moreover, the reversible tensioning of the safety belt may be used for communicating to the occupant that the vehicle may be about to be involved in a collision.

In the embodiment of the present invention illustrated in Fig. 1, the safety belt tensioner 24 is located with respect to the first guide arrangement 20 such that - when following the extension of the safety belt 18 from the safety belt tensioner - components of the safety belt system 12 are arranged in the following order: the safety belt tensioner 24, the first guide arrangement 20, the third guide arrangement 23 and the second guide arrangement 22. However, other embodiments of the present invention may have the components arranged in another order. Purely by way of example, the safety belt tensioner 24 may be located by the second guide arrangement 22. Furthermore, the safety belt 18 of the safety belt system 12 may be connected to more than one safety belt tensioner (not shown in Fig. 1).

Moreover, in the Fig. 1 embodiment of the present invention, the safety belt tensioner 24 is located above the first guide arrangement 20. However, in other embodiments of the present invention, the safety belt tensioner 24 may be located on the same level, or below, the first guide arrangement 20.

The reversible safety belt tensioner 24 may be implemented in a plurality of different ways. Purely by way of example, the safety belt tensioner may be actuated by hydraulic and/or electric means in order to tension, often by retraction of, the safety belt 18. Generally, the safety belt tensioner 24 is in communication with a pre-crash sensor 26. The above communication may be achieved in a plurality of ways. Purely by way of example the pre-crash sensor 26 and the reversible safety belt tensioner 24 may be directly or indirectly connected to one another by means of one or more cables, for instance an electrical and/or optical cable. Instead of, or in addition to, the use of cables, the pre-crash sensor 26 and the reversible safety belt tensioner 24 may be in communication with one another via a wireless communication means.

The pre-crash sensor 26 is adapted to inform at least the reversible safety belt tensioner 24 when the vehicle is subjected to an impending crash situation. In implementations of the pre-crash sensor 26, the pre-crash sensor 26 may comprise a visual sensor, a RADAR sensor, a LIDAR sensor or any other type of sensor suitable for detecting if the vehicle is subjected to an impending crash situation. Moreover, in implementations of the pre-crash sensor 26, the sensor may comprise an assembly of sub-sensors each one of which comprising a visual sensor, a RADAR sensor, a LIDAR sensor or any other type of sensor suitable for detecting if the vehicle is subjected to an impending crash situation.

In other implementations of the pre-crash sensor 26, the sensor may comprise a sub-sensor which is adapted to detect driver impairment. Purely by way of example, such a sub-sensor may be adapted to detect an impaired driving behaviour or it may be adapted to monitor the eye movements of a driver of the vehicle.

Again purely by way of example, the safety belt tensioner 24 may be adapted to reversibly tension the safety belt 18 such that a tension force of approximately 500 N or less, preferably 300 N or less, is obtained in the belt 18.

A safety belt tensioner 24 adapted to reversibly tension the belt 18 to a tension force within the above ranges is hereinafter also referred to as a pre-pretensioner.

In an implementation of the pre-crash sensor 26 and the safety belt tensioner 24 assembly, the pre-crash sensor 26 is adapted to detect an imminent crash situation. Whenever such a crash situation is detected, the pre-crash sensor 26 may communicate with the safety belt tensioner 24 such that it is actuated to reversibly tension the safety belt 18.

The Fig. 1 safety belt system 12 further comprises an additional safety belt tensioner 27. The additional safety belt tensioner 27 is adapted to tension the safety belt 18 in the event of an occurring and/or unavoidable crash situation. The additional safety belt tensioner 27 may be in communication with a crash sensor 29 adapted to detect when the vehicle hosting the safety belt system 12 is involved in an occurring and/or unavoidable crash situation.

In some implementations of the sensors 26, 29, the pre-crash sensor 26 and the crash sensor 29 may have at least one sub-sensor in common. Moreover, in other implementations of the sensors 26, 29, the pre-crash sensor 26 and the crash sensor 29 may be one and the same sensor or sensor assembly.

Furthermore, in implementations of the crash sensor 29, the crash sensor 29 may comprise force, pressure and/or strain sensors (not shown) adapted to detect when at least a portion of the vehicle hosting the system is imparted a load and/or a deflection.

The additional safety belt tensioner 27 may be adapted to tension the safety belt 18 such that a tension force of approximately 2kN or less is obtained in the belt 18. The additional safety belt tensioner 27 may be implemented in a plurality of different ways. Purely by way of example, the safety belt tensioner may be actuated by pyrotechnic, hydraulic and/or electric means in order to tension, often by retraction of, the safety belt 18. The above tension of the safety belt 18 by the additional safety belt tensioner 27 may be irreversible.

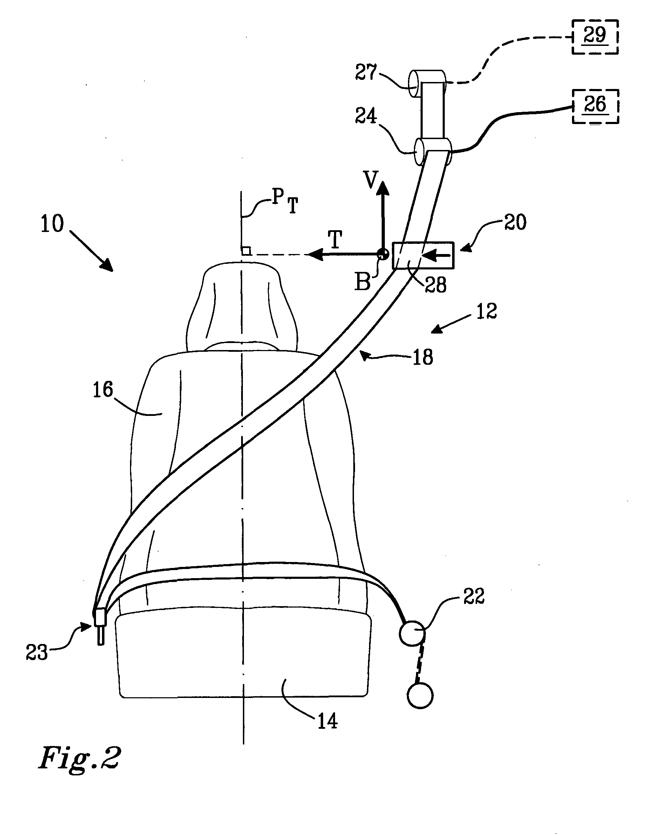

Fig. 2 illustrates the Fig. 1 embodiment of the present invention when the safety belt tensioner 24 has been actuated. As may be gleaned from Fig. 2, the first guide arrangement 20 is configured such that it allows at least a belt portion 28 of the belt 18, which belt portion 28 is in contact with the first guide arrangement 20, to be displaced in a direction at least partially coinciding with the transversal direction T and/or the backward direction B.

In the embodiment illustrated in Fig. 2, the belt portion 28 is arranged to be displaced at least partially towards the transversal centre plane P_{T} in the transversal direction T when the vehicle 17 is about to be involved in an impending crash situation.

Thus, when the safety belt tensioner tensions the belt 18, the safety belt assumes a crash configuration which is appropriate from an injury prevention point of view since a portion of the safety belt which is adapted to extend over an occupant's torso will be raised such that its upper portion will be located closer to the neck of the occupant, as compared to the comfort configuration illustrated in Fig. 1.

In order to obtain an appropriate distinction between the comfort configuration and the crash configuration, the first guide arrangement may be adapted to allow a displacement of the belt portion 28 in a direction towards the transversal centre plane P_{T} which is at least 0.2 times, preferably at least 0.4 times and more preferred at least 0.6 times, the width of the belt portion 28. To this end, it should be noted that a safety belt generally has a width of 4 - 8 cm.

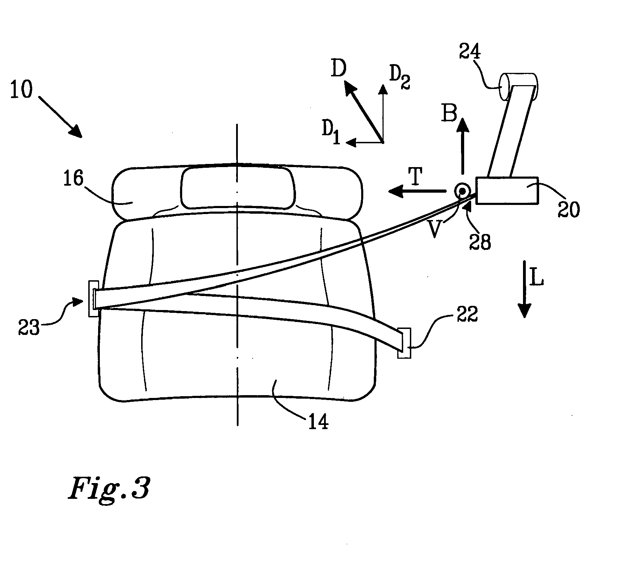

Fig. 3 is a top view of a portion of the Fig. 1 seat 10 with the safety belt system. Fig. 3 illustrates the transversal direction T, the backward direction B, the vertical direction V and the longitudinal direction L of the system 12. Moreover, Fig. 3 illustrates a displacement direction D having a first horizontal component D₁ which coincides with, i.e. is parallel with and extends in the same direction as, the transversal direction T and a second horizontal component D₂ which coincides with the backward direction B. As such, a displacement direction which is "at least partially coinciding with the transversal direction T and/or said backward direction B" is intended to encompass displacement directions D wherein:
- the displacement direction D has a horizontal component which coincides with the transversal direction T;
- the displacement direction D has a horizontal component which coincides with the backward direction B, or
- the displacement direction D has a first horizontal component D₁ which coincides with the transversal direction T and a second horizontal component D₂ which coincides with the backward direction B.

A "horizontal component" is intended to encompass components which extend in a direction perpendicular to the vertical extension V.

The first belt portion 28 may, in some embodiments of the present invention, be displaced in a displacement direction D which also has a vertical component, i.e. a component which is parallel to the vertical direction V. In the embodiments of the present invention presented hereinbelow, the displacement direction is generally coinciding with the transversal direction T but any one of the below embodiments could be adjusted so as to achieve a displacement direction D which coincides with the backward direction B or which has a first component D₁ which coincides with the transversal direction T and a second component D₂ which coincides with the backward direction B.

Embodiments of safety belt systems configured to assume a comfort configuration as well as a crash configuration will be presented hereinbelow.

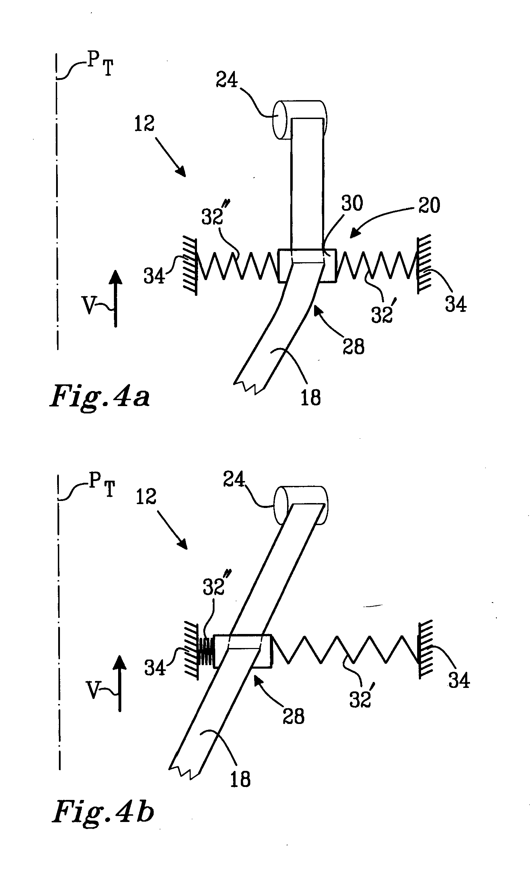

In the first group of embodiments of the present invention presented hereinbelow, the first guide arrangement is arranged to allow a displacement of the belt portion 28 when the reversible safety belt tensioner 24 tensions the belt. Fig. 4a and Fig. 4b illustrate a portion of an embodiment of a safety belt system of the present invention. Fig. 4a illustrates the embodiment in a comfort configuration. As may be gleaned from Fig. 4a, the safety belt system 12 illustrated therein comprises a first guide arrangement 20 which in turn comprises a first guide point 30. The first guide point 30 is in Fig. 4a implemented as a chaser through which at least a portion of the safety belt 18 runs. The chaser may be closed such that it circumscribes a portion of the safety belt or it may be open such that the belt may be guided in and out of the chaser. If the chaser is open, the opening thereof is preferably facing away from the transversal centre plane P_{T}. Moreover, the Fig. 4a embodiment of the present invention comprises resilient means, which is implemented as two springs 32', 32" in Fig. 4a, connected to the first guide point 30. Fig. 4a also illustrates that the resilient means extends between the first guide point 30 and a support member 34.

The support member 34 may be rigidly connected to at least one of a component of the first guide arrangement 20, the seat 10 or another portion of a vehicle (not shown). In the implementation of the resilient means illustrated in Fig. 4a, the springs 32', 32" extends substantially horizontally, i.e. in a direction substantially perpendicular to the vertical direction V, and the resilient means comprises an inner spring 32" located between the first guide point 30 and the transversal centre plane P_{T} and an outer spring 32' which is located on the opposite side of the first guide point 30.

Fig. 4b illustrates the Fig. 4a embodiment when the safety belt tensioner 24 has been actuated so as to reversibly tension the safety belt 18. As may be gleaned from Fig. 4b, following the tensioning of the safety belt 18, the inner spring 32" is compressed whereas the outer spring 32' is extended such that the first guide point 30 is displaced towards the transversal centre plane P_{T}.

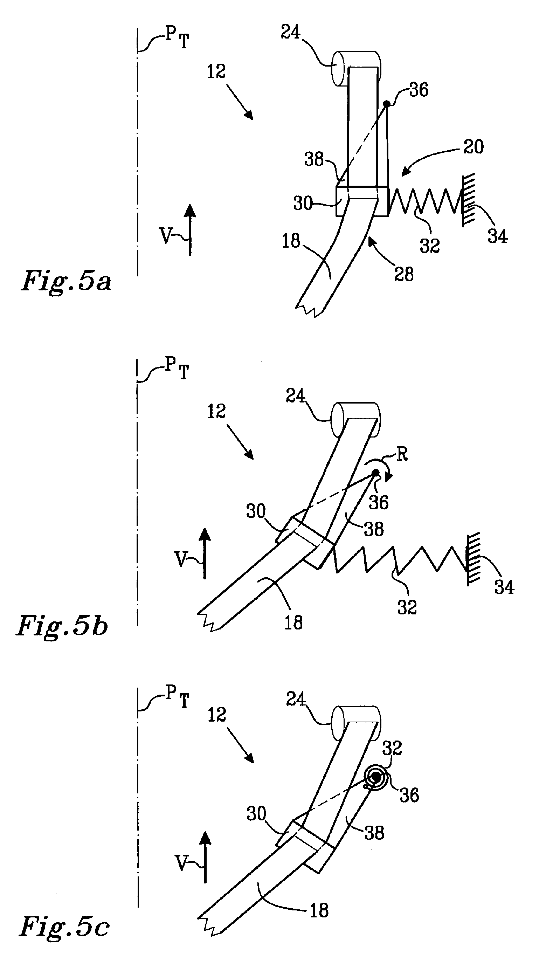

Fig. 5a and Fig. 5b illustrate a portion of another embodiment of a safety belt system of the present invention. In Fig. 5a, the first guide arrangement comprises the first guide point 30, which again is implemented as a chaser, which is pivotally connected to a pivot 36. In the implementation illustrated in Fig. 5a, the first guide point 30 is pivotally connected to the pivot via a lever 38. A resilient means 32 is connected to the first guide point 30, either directly or indirectly, such that the first guide point 30 may be kept substantially in the position illustrated in Fig. 5a during e.g. normal driving conditions.

When the safety belt tensioner 24 has been actuated so as to reversibly tension the safety belt 18, at least the first guide point 30 pivots in a direction as indicated by arrow R in Fig. 5b since the resilient means 32 yields. The implementation of the resilient means 32 illustrated in Fig. 5b is a spring directly or indirectly connected with the first guide point 30 and a support member 34. However, Fig. 5c illustrates an alternative, and also a preferred, implementation of the resilient means 32, viz a torsion spring. In one implementation of a torsion spring arrangement, one end of the torsion spring may be connected to the guide point 30 whereas the other may be connected to a support member, such as a portion of the first guide arrangement 20, which is substantially prevented from rotation around the pivot 36.

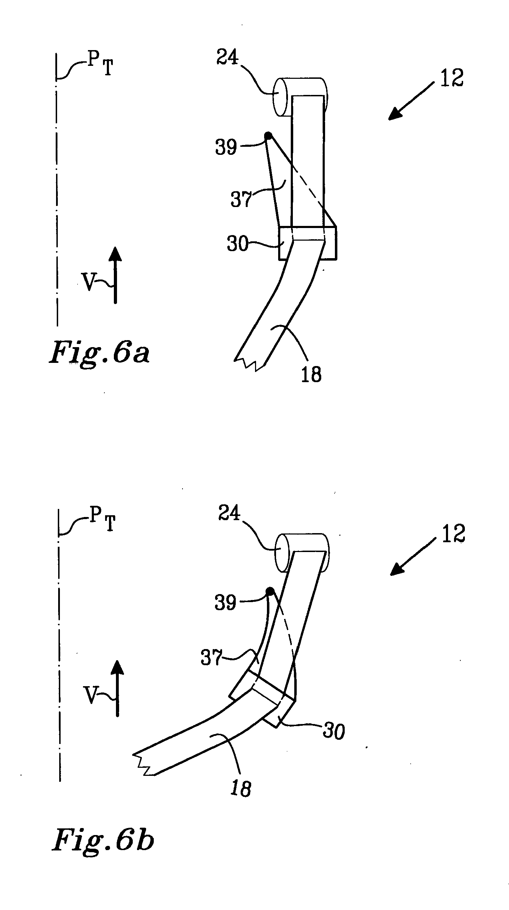

Instead of providing resilient means 32 and a pivot 36 as discussed hereinabove, a first guide point 30 may be connected to a connection means 39, such as bolt, rivet, weld joint etcetera, via a deflectable member 37. Purely by way of example, the deflectable member 37 may be made of a plastics material and/or a metal and the deflectable member 37 is adapted to be bent inwards, i.e. in a direction towards the transversal centre plane P_{T}, when the safety belt tensioner 24 tensions the safety belt 18, see Fig. 6a and 6b.

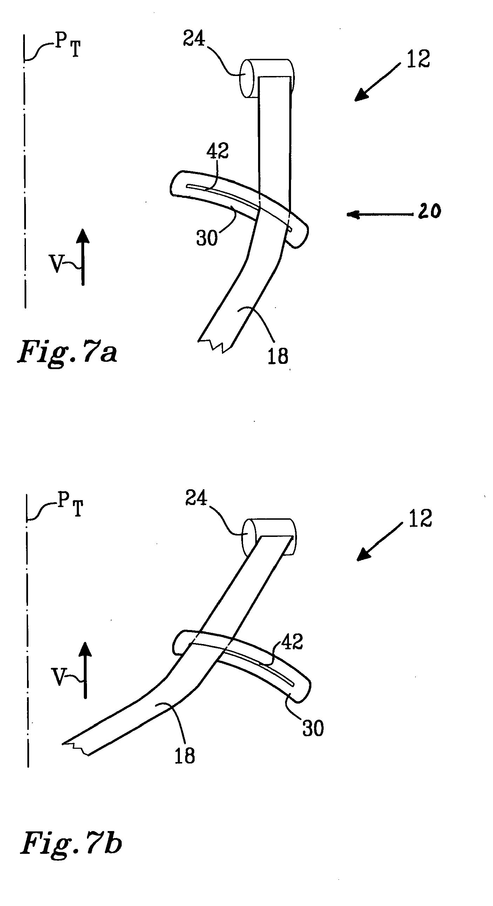

Figs. 7a and 7b illustrate a portion of a further embodiment of the present invention. As may be gleaned from Fig. 7a, the first guide arrangement 20 of the illustrated embodiment comprises a slot 42 through which a portion of the safety belt 18 extends. The slot 42 has an extension in at least a direction perpendicular to the transversal centre plane P_{T}, which extension is at least 2 times, preferably 3 times, greater than the width of the belt. Moreover, the Fig. 7a slot is preferably inclined in relation to a horizontal plane, i.e. a plane extending perpendicular to the vertical direction V, such that the portion of the slot42 which is located towards the transversal centre plane P_{T} is above, i.e. on a higher elevation in the vertical extension, than the portion of the slot 42 which is located away from the transversal centre plane P_{T}. In the implementation of the slot 42 illustrated in Fig. 7a, the slot 42 is arcuate, which is a preferred implementation of the slot 42.

During normal driving conditions, the safety belt 18 is, due to friction forces built up between the safety belt 18 and the circumference of the slot 42, kept in a position as illustrated in Fig. 7a. Thus, the safety belt 18 is retained in a portion of the slot 42 which is located away from the transversal centre plane P_{T}. When the safety belt tensioner 24 reversibly tensions the belt 18, the safety belt 18 slides in the slot 42 and is subsequently displaced towards the transversal centre plane P_{T} and assumes a pre-crash configuration in which the safety belt 18 extends through the slot 42 at a portion thereof which is located towards the transversal centre plane P_{T}.

In the second group of embodiments of the present invention presented hereinbelow, the safety belt system comprises a guide actuator which is adapted to displace at least the belt portion 28 in a direction at least partially coinciding with the transversal direction T and/or the backward direction B in response to the pre-crash sensor 26 emitting the crash situation signal. As such, instead of, or in addition to, comprising a member which is adapted to be compliant, to thereby passively alter the position of the belt portion, when the safety belt tensioner 24 has been actuated so as to reversibly tension the safety belt 18, the second group of embodiments comprises an actuator which is adapted to actively displace at least the belt portion 28.

One advantage with the second group of embodiments is that it does not require a pre-pretensioner in order to function properly. Thus, the guide actuator may be used for positioning the safety belt in a pre-crash configuration in the event of an impending crash and the system 12 may comprise an additional safety belt tensioner 27 adapted to tension the seat belt 18, should a collision actually occur. Moreover, the guide actuator may be used for displacing the belt portion 28 and possibly also for achieving an initial pretension in the seat belt 18.

Should a system comprise a guide actuator as well as a reversible safety belt tensioner 24, such a system would be able to be adjusted to different kind of occupants.

Purely by way of example, for a small occupant with a low weight, such as a child, a low tensioning of the safety belt and a large displacement of the first guide member may be desired.

Moreover, for a large occupant with a large weight, such as an obese person, a large tensioning of the safety belt may be required but only a small displacement of the first guide member may be needed in order to obtain a suitable pre-crash configuration.

A system comprising a guide actuator as well as a reversible safety belt tensioner may be adjusted so as to achieve at least one of the above two displacement/tensioning combinations.

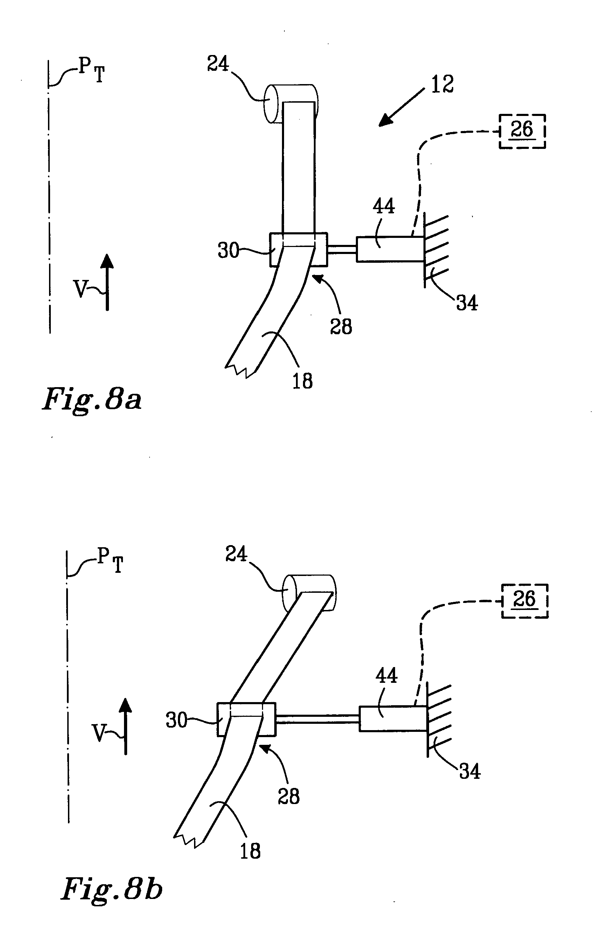

Figs. 8a and 8b illustrate a portion of a further embodiment of a safety belt system of the present invention. In a similar vein as for the Figs. 4a and 4b embodiment, the Figs. 8a and 8b embodiment comprises a first guide point 30, again exemplified by a closed or open chaser. The chaser 30 is connected to a guide actuator 44 which in turn is connected to a support member 34. The support member 34 may be rigidly connected to at least one component of the first guide arrangement 20, the seat 10 or another portion of a vehicle (not shown in Fig. 8a or 8b).

The guide actuator 44 is adapted to communicate with, or at least to receive a crash situation signal from, the pre-crash sensor 26. Examples of implementations of the pre-crash sensor have already been presented in conjunction with Fig. 1 and need not be further discussed here. The guide actuator 44 and the pre-crash sensor 26 may be directly or indirectly connected to one another by means of one or more cables, for instance an electrical and/or optical cable. Instead, or in addition, to the use of cables, the pre-crash sensor 26 and the reversible guide actuator 44 may be in communication with one another via a wireless communication means (not shown).

In the implementation of the guide actuator 44 illustrated in Fig. 8a, the actuator extends substantially horizontally, i.e. in a direction substantially perpendicular to the vertical direction V. In fact, the Fig. 8a implementation of the guide actuator 44 extends in the transversal direction T, but in other embodiments of the present invention, the guide actuator 44 may extend at least in the backward direction B or in a direction with a first component (not shown) coinciding with the transversal direction T and a second component (not shown) coinciding with the backward direction B. Moreover, the guide actuator 44 may have an extension direction with a component which is parallel to the vertical direction V.

Fig. 8b illustrates the Fig. 8a embodiment when the pre-crash sensor 26 has emitted, or is emitting, the crash situation signal, i.e. a signal indicating that the vehicle may be involved in a collision. As may be gleaned from Fig. 8b, in response to the crash situation signal, the guide actuator 44 is extended such that the chaser 30 is displaced towards the transversal centre plane P_{T} such that a pre-crash configuration of the safety belt 18 is obtained.

The guide actuator 44 may be implemented in a plurality of ways. Purely by way of example, the guide actuator 44 may comprise hydraulic and/or electric actuating means. Moreover, the guide actuator 44 may comprise a solenoid (not shown).

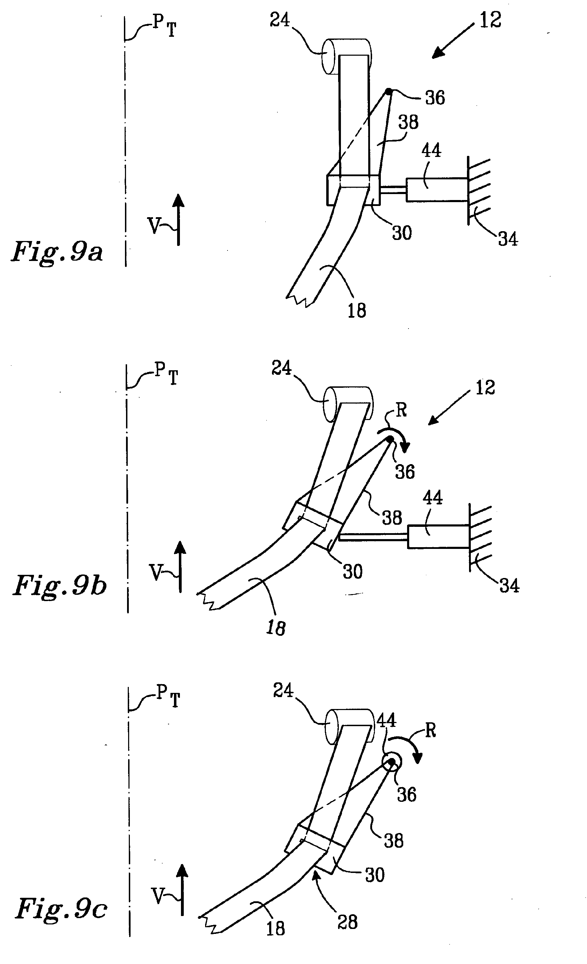

In a similar vein as the embodiments of the present invention illustrated in Fig. 5a - 5c, the guide actuator 44 may be used in implementations of the first guide arrangement 20 wherein the chaser 30 is pivotally connected to a pivot 36. To this end, reference is made to the implementations of the first guide arrangement 20 illustrated in Fig. 9a - 9c. The guide actuator 44 may be implemented so as to impart on the chaser 30 and/or the lever a force in a rectilinear direction, as is exemplified in Fig. 9a and Fig. 9b, or to impart on the lever 38 a torque, as is exemplified in Fig. 9c.

While there have been shown and described and pointed out fundamental novel features of the invention as applied to preferred embodiments thereof, it will be understood that various omissions and substitutions and changes in the form and details of the devices illustrated, and in their operation, may be made by those skilled in the art. For example, it is expressly intended that all combinations of those elements and/or method steps which perform substantially the same function in substantially the same way to achieve the same results are within the scope of the invention.

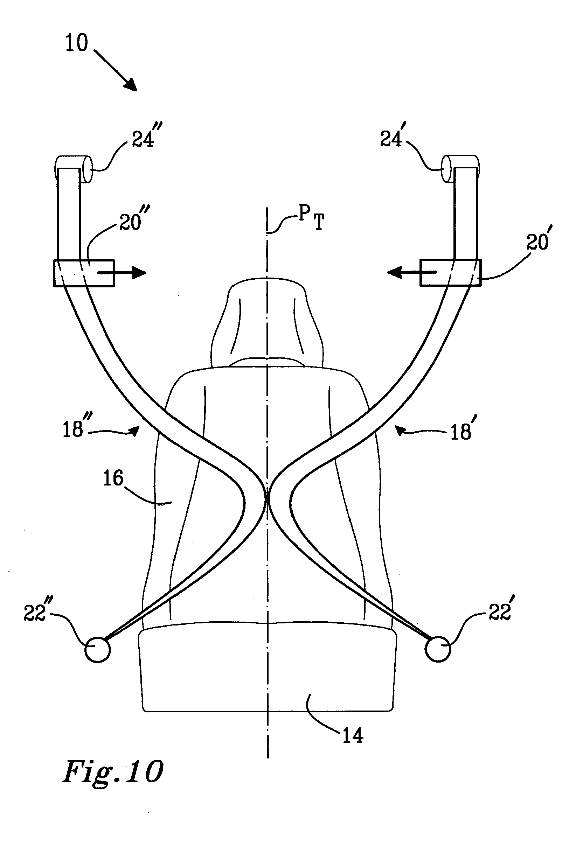

Furthermore, although the embodiments hereinabove relate to a three point belt system, the invention is also applicable to other types of safety belt systems. To this end, reference is made to Fig. 10 illustrating an embodiment of the present invention. As may be gleaned from Fig. 10, the safety belt system 12 disclosed therein is a four point belt system. The four point belt system comprises two safety belts 18', 18", each one of which being connected to a separate safety belt tensioner 24', 24" and a first guide arrangement 20', 20". Each one of the first guide arrangements 20', 20" is adapted to allow a displacement of the corresponding safety belt 18', 18" towards the transversal centre plane P_{T}, either passively when the belt tensioner 24', 24" tensions the corresponding safety belt 18', 18" or actively via guide actuators (not shown in Fig. 10).

However, in other embodiments of the safety belt system 12 of the present invention, a four point safety belt may be provided with fewer or more safety belt tensioners and/or first guide arrangements configured so as to displace a portion of the corresponding safety belt towards the transversal centre plane P_{T}. Purely by way of example, only one 18' belt of a four point safety belt system 12 may be connected to a first guide arrangements 20' adapted to allow the inward, i.e. towards the transversal centre plane P_{T}, displacement of a safety belt portion.

Moreover, it should be recognized that structures and/or elements and/or method steps shown and/or described in connection with any disclosed form or embodiment of the invention may be incorporated in any other disclosed or described or suggested form or embodiment as a general matter of design choice. It is the intention, therefore, to be limited only as indicated by the scope of the claims appended hereto.

## Claims

1. A safety belt system (12) for a vehicle seat (10), said vehicle seat (10) having a vertical extension in a vertical direction (V) and a transversal centre plane (P_{T}) which, when a person occupies said vehicle seat, extends vertically between the occupant's left and right hand sides, said safety belt system (12) comprising a belt (18), a first guide arrangement (20) and a second guide arrangement (22), said safety belt system (12) being configured such that when said safety belt system (12) is mounted with said vehicle seat (10), said first and second guide arrangements (20, 22) are located on the same side of said transversal centre plane (P_{T}) and said first guide arrangement (20) is located above said second guide arrangement (22), said system (12) further comprising a transversal direction (T) being perpendicular to said transversal centre plane (P_{T}) and extending from said first guide arrangement (20) towards said transversal centre plane (P_{T}), said system further comprising a backward direction (B) extending from said first guide arrangement (20) in a direction perpendicular to both said vertical direction (V) and said transversal direction (T) such that said vertical direction (V), said transversal direction (T) and said backward direction (B) together form a right-handed system, said system (12) further comprising a pre-crash sensor (26) which is adapted to emit a crash situation signal which is indicative of said vehicle being subjected to an impending crash situation, said safety belt system (12) further comprising a reversible safety belt tensioner (24) adapted to reversibly tension said belt (18) in response to said pre-crash sensor (26) emitting said crash situation signal **characterized in that** said first guide arrangement (20) is configured such that it allows at least a belt portion (28) of said belt (18), which belt portion (28) is in contact with said first guide arrangement (20), to be reversibly displaced in a direction at least partially coinciding with said transversal direction (T) and/or said backward direction (B) when said reversible safety belt tensioner (24) tensions said belt (18).

2. The safety belt system (12) according to claim 1, wherein said first guide arrangement (20) comprises a first guide point (30) and is configured such that said first guide point (30) is displaced together with a belt portion (28) of said belt (18) when said safety belt tensioner (24) tensions said belt (18).

3. The safety belt system (12) according to claim 2, wherein said first guide arrangement (20) comprises a resilient means (32) adapted to allow said displacement of said first guide point (30) when said reversible safety belt tensioner (24) tensions said belt (18).

4. The safety belt system (12) according to claim 2 or 3, wherein said first guide arrangement (20) is adapted to pivot to thereby achieve said displacement of said first guide point(30) when said safety belt tensioner (24) tensions said belt (18).

5. The safety belt system (12) according to claim 4, when dependent on claim 3, wherein said resilient means (32) comprises a torsion spring.

6. The safety belt system (12) according to any one of the preceding claims, wherein said first guide arrangement (20) comprises a slot (42) having an extension in at least a direction perpendicular to said transversal centre plane (P_{T}), which extension is at least 2 times, preferably 3 times, greater than the width of said belt (18).

7. A safety belt system (12) for a vehicle seat (10), said vehicle seat (10) having a vertical extension in a vertical direction (V) and a transversal centre plane (P_{T}) which, when a person occupies said vehicle seat, extends vertically between the occupant's left and right hand sides, said safety belt system (12) comprising a belt (18), a first guide arrangement (20) and a second guide arrangement (22), said safety belt system (12) being configured such that when said safety belt system (12) is mounted with said vehicle seat (10), said first and second guide arrangements (20, 22) are located on the same side of said transversal centre plane (P_{T}) and said first guide arrangement (20) is located above said second guide arrangement (22), said system (12) further comprising a transversal direction (T) being perpendicular to said transversal centre plane (P_{T}) and extending from said first guide arrangement (20) towards said transversal centre plane (P_{T}), said system further comprising a backward direction (B) extending from said first guide arrangement (20) in a direction perpendicular to both said vertical direction (V) and said transversal direction (T) such that said vertical direction (V), said transversal direction (T) and said backward direction (B) together form a right-handed system, said system (12) further comprising a pre-crash sensor (26) which is adapted to emit a crash situation signal which is indicative of said vehicle being subjected to an impending crash situation, **characterized in that** safety belt system (12) comprises a guide actuator (44) which is adapted to displace at a least a belt portion (28) of said belt (18) , which belt portion (28) is in contact with said first guide arrangement (20), in a direction at least partially coinciding with said transversal direction (T) and/or said backward direction (B) in response to said pre-crash sensor (26) emitting said crash situation signal.

8. The safety belt system (12) according to claim 7, wherein said first guide arrangement (20) comprises a first guide point (30) and is configured such that said first guide point (30) is displaced together with a belt portion (28) of said belt (18) when said safety belt tensioner (24) tensions said belt (18).

9. The safety belt system (12) according to claim 8, wherein said first guide arrangement (20) comprises a lever (38), said first guide point (30) being connected to said lever (38) and said guide actuator (44) being adapted to pivot said lever (38) in response to said pre-crash sensor (26) emitting said crash situation signal.

10. A vehicle seat assembly, comprising a seat (10) and a safety belt system (12) according to any one of the preceding claims.

11. A vehicle, comprising a vehicle seat assembly according to claim 10 and/or a safety belt system (12) according to any one of claims 1 to 9.

12. A method for arranging a safety belt (18) in a pre-crash configuration, said safety belt (18) forming a part of a safety belt system (12) for a seat (10), which seat (10) is occupied by an occupant and is located in or on a vehicle, said vehicle seat (10) having a vertical extension (V) and a transversal centre plane (P_{T}) which extends vertically between the occupant's left and right hand sides, said safety belt system (12) comprising a first guide arrangement (20) and a second guide arrangement (22), said safety belt system (12) being configured such that said first and second guide arrangements (20, 22) are located on the same side of said transversal centre plane (P_{T}) and said first guide arrangement (20) is located above said second guide arrangement (22), said system (12) further comprising a transversal direction (T) being perpendicular to said transversal centre plane (P_{T}) and extending from said first guide arrangement (20) towards said transversal centre plane (P_{T}), said system further comprising a backward direction (B) extending from said first guide arrangement (20) in a direction perpendicular to both said vertical direction (V) and said transversal direction (T) such that said vertical direction (V), said transversal direction (T) and said backward direction (B) together form a right-handed system, said system (12) further comprising a pre-crash sensor (26), said method comprising the steps of:
- determining that said vehicle is subjected to an impending collision using said pre-crash sensor (26);
**characterized in that** the method further comprises the step of:
- when said pre-crash sensor (26) has determined that said vehicle is subjected to an impending crash situation: reversibly displacing at least a belt portion (28) of said belt (18), which belt portion(28) is in contact with said first guide arrangement (20), in a direction at least partially coinciding with said transversal direction (T) and/or said backward direction (B).

13. The method according to claim 12, wherein said a belt portion (28) is displaced at least partially towards said transversal centre plane (P_{T}).

14. The method according to claim 12 or 13, wherein the method further comprises the step of:
- when said pre-crash sensor (26) has determined that said vehicle will be involved in an impending collision: actuating said safety belt tensioner (24) to reversibly tension said safety belt (18).

## Patentansprüche

1. Sicherheitsgurtanordnung (12) für einen Fahrzeugsitz (10), wobei der Fahrzeugsitz (10) eine vertikale Erstreckung in einer vertikalen Richtung (V) und eine Quermittelebene (P_{T}), die sich, wenn eine Person den Fahrzeugsitz einnimmt, vertikal zwischen der linken und der rechten Seite des Insassen erstreckt, aufweist, wobei das Sicherheitsgurtsystem (12) einen Gurt (18), eine erste Führungsanordnung (20) und eine zweite Führungsanordnung (22) umfasst, wobei das Sicherheitsgurtsystem (12) so konfiguriert ist, dass, wenn das Sicherheitsgurtsystem (12) mit dem Fahrzeugsitz (10) verbaut ist, sich die erste und zweite Führungsanordnung (20, 22) auf derselben Seite der Quermittelebene (P_{T}) befinden und sich die erste Führungsanordnung (20) über der zweiten Führungsanordnung (22) befindet, wobei das System (12) ferner eine Querrichtung (T) umfasst, die senkrecht zur Quermittelebene (P_{T}) ist und sich von der ersten Führungsanordnung (20) zur Quermittelebene (P_{T}) erstreckt, wobei das System ferner eine Rückwärtsrichtung (B) umfasst, die sich von der ersten Führungsanordnung (20) in einer senkrecht zu sowohl der vertikalen Richtung (V) als auch der Querrichtung (T) verlaufenden Richtung erstreckt, so dass die vertikale Richtung (V), die Querrichtung (T) und die Rückwärtsrichtung (B) zusammen ein Rechtssystem bilden, wobei das System (12) ferner einen Pre-Crash-Sensor (26) umfasst, der dazu ausgeführt ist, ein Aufprallsituationssignal auszugeben, das anzeigt, dass das Fahrzeug einer unmittelbar bevorstehenden Aufprallsituation ausgesetzt ist, wobei das Sicherheitsgurtsystem (12) ferner einen reversiblen Sicherheitsgurtstraffer (24) umfasst, der dazu ausgeführt ist, als Reaktion darauf, dass der Pre-Crash-Sensor (26) das Aufprallsituationssignal ausgibt, den Gurt (18) reversibel zu spannen, **dadurch gekennzeichnet, dass** die erste Führungsanordnung (20) so konfiguriert ist, dass sie ermöglicht, dass zumindest ein mit der ersten Führungsanordnung (20) in Berührung stehender Gurtteil (28) des Gurts (18) in einer Richtung, die zumindest teilweise mit der Querrichtung (T) und/oder der Rückwärtsrichtung (B) zusammenfällt, reversibel bewegt werden kann, wenn der reversible Sicherheitsgurtstraffer (24) den Gurt (18) spannt.

2. Sicherheitsgurtsystem (12) nach Anspruch 1, wobei die erste Führungsanordnung (20) einen ersten Führungspunkt (30) umfasst und so konfiguriert ist, dass der erste Führungspunkt (30) zusammen mit einem Gurtteil (28) des Gurts (18) bewegt wird, wenn der Sicherheitsgurtstraffer (24) den Gurt (18) spannt.

3. Sicherheitsgurtsystem (12) nach Anspruch 2, wobei die erste Führungsanordnung (20) ein elastisches Mittel (32) umfasst, das dazu ausgeführt ist, eine Bewegung des ersten Führungspunkts (30) zu gestatten, wenn der reversible Sicherheitsgurtstraffer (24) den Gurt (18) spannt.

4. Sicherheitsgurtsystem (12) gemäß Anspruch 2 oder 3, wobei die erste Führungsanordnung (20) dazu ausgeführt ist, zu schwenken, um dadurch die Bewegung des ersten Führungspunkts (30), wenn der Sicherheitsgurtstraffer (24) den Gurt (18) spannt, zu erzielen.

5. Sicherheitsgurtsystem (12) nach Anspruch 4, sofern von Anspruch 3 abhängig, wobei das elastische Mittel (32) eine Torsionsfeder umfasst.

6. Sicherheitsgurtsystem (12) nach einem der vorhergehenden Ansprüche, wobei die erste Führungsanordnung (20) einen Schlitz (42) umfasst, der eine Erstreckung in mindestens einer zur Quermittelebene (P_{T}) senkrechten Richtung aufweist, wobei die Erstreckung mindestens um das 2-Fache, vorzugsweise das 3-Fache, größer als die Breite des Gurts (18) ist.

7. Sicherheitsgurtanordnung (12) für einen Fahrzeugsitz (10), wobei der Fahrzeugsitz (10) eine vertikale Erstreckung in einer vertikalen Richtung (V) und eine Quermittelebene (P_{T}), die sich, wenn eine Person den Fahrzeugsitz einnimmt, vertikal zwischen der linken und der rechten Seite des Insassen erstreckt, aufweist, wobei das Sicherheitsgurtsystem (12) einen Gurt (18), eine erste Führungsanordnung (20) und eine zweite Führungsanordnung (22) umfasst, wobei das Sicherheitsgurtsystem (12) so konfiguriert ist, dass, wenn das Sicherheitsgurtsystem (12) mit dem Fahrzeugsitz (10) verbaut ist, sich die erste und zweite Führungsanordnung (20, 22) auf derselben Seite der Quermittelebene (P_{T}) befinden und sich die erste Führungsanordnung (20) über der zweiten Führungsanordnung (22) befindet, wobei das System (12) ferner eine Querrichtung (T) umfasst, die senkrecht zur Quermittelebene (P_{T}) ist und sich von der ersten Führungsanordnung (20) zur Quermittelebene (P_{T}) erstreckt, wobei das System ferner eine Rückwärtsrichtung (B) umfasst, die sich von der ersten Führungsanordnung (20) in einer senkrecht zu sowohl der vertikalen Richtung (V) als auch der Querrichtung (T) verlaufenden Richtung erstreckt, so dass die vertikale Richtung (V), die Querrichtung (T) und die Rückwärtsrichtung (B) zusammen ein Rechtssystem bilden, wobei das System (12) ferner einen Pre-Crash-Sensor (26) umfasst, der dazu ausgeführt ist, ein Aufprallsituationssignal auszugeben, das anzeigt, dass das Fahrzeug einer unmittelbar bevorstehenden Aufprallsituation ausgesetzt ist, **dadurch gekennzeichnet, dass** das Sicherheitsgurtsystem (12) einen Führungsaktuator (44) umfasst, der dazu ausgeführt ist, als Reaktion darauf, dass der Pre-Crash-Sensor (26) das Aufprallsituationssignal ausgibt, zumindest einen mit der ersten Führungsanordnung (20) in Berührung stehenden Gurtteil (28) des Gurts (18) in einer Richtung, die zumindest teilweise mit der Querrichtung (T) und/oder der Rückwärtsrichtung (B) zusammenfällt, zu bewegen.

8. Sicherheitsgurtsystem (12) nach Anspruch 7, wobei die erste Führungsanordnung (20) einen ersten Führungspunkt (30) umfasst und so konfiguriert ist, dass der erste Führungspunkt (30) zusammen mit einem Gurtteil (28) des Gurts (18) bewegt wird, wenn der Sicherheitsgurtstraffer (24) den Gurt (18) spannt.

9. Sicherheitsgurtsystem (12) nach Anspruch 8, wobei die erste Führungsanordnung (20) einen Hebel (38) umfasst, wobei der erste Führungspunkt (30) mit dem Hebel (38) verbunden ist und der Führungsaktuator (44) dazu ausgeführt ist, als Reaktion darauf, dass der Pre-Crash-Sensor (26) das Aufprallsituationssignal ausgibt, den Hebel (38) zu schwenken.

10. Fahrzeugsitzanordnung, die einen Sitz (10) und ein Sicherheitsgurtsystem (12) nach einem der vorhergehenden Ansprüche umfasst.

11. Fahrzeug, das eine Fahrzeugsitzanordnung nach Anspruch 10 und/oder ein Sicherheitsgurtsystem (12) nach einem der Ansprüche 1 bis 9 umfasst.

12. Verfahren zum Anordnen eines Sicherheitsgurts (18) in einer Pre-Crash-Konfiguration, wobei der Sicherheitsgurt (18) einen Teil eines Sicherheitsgurtsystems (12) für einen Sitz (10) bildet, wobei der Sitz (10) von einem Insassen eingenommen ist und sich in oder an einem Fahrzeug befindet, wobei der Fahrzeugsitz (10) eine vertikale Erstreckung (V) und eine Quermittelebene (P_{T}), die sich vertikal zwischen der linken und der rechten Seite des Insassen erstreckt, aufweist, wobei das Sicherheitsgurtsystem (12) eine erste Führungsanordnung (20) und eine zweite Führungsanordnung (22) umfasst, wobei das Sicherheitsgurtsystem (12) so konfiguriert ist, dass sich die erste und zweite Führungsanordnung (20, 22) auf derselben Seite der Quermittelebene (P_{T}) befinden und sich die erste Führungsanordnung (20) über der zweiten Führungsanordnung (22) befindet, wobei das System (12) ferner eine Querrichtung (T) umfasst, die senkrecht zur Quermittelebene (P_{T}) ist und sich von der ersten Führungsanordnung (20) zur Quermittelebene (P_{T}) erstreckt, wobei das System ferner eine Rückwärtsrichtung (B) umfasst, die sich von der ersten Führungsanordnung (20) in einer senkrecht zu sowohl der vertikalen Richtung (V) als auch der Querrichtung (T) verlaufenden Richtung erstreckt, so dass die vertikale Richtung (V), die Querrichtung (T) und die Rückwärtsrichtung (B) zusammen ein Rechtssystem bilden, wobei das System (12) ferner einen Pre-Crash-Sensor (26) umfasst, wobei das Verfahren die folgenden Schritte umfasst:
- Bestimmen unter Verwendung des Pre-Crash-Sensors (26), dass das Fahrzeug einem unmittelbar bevorstehenden Aufprall ausgesetzt ist;
**dadurch gekennzeichnet, dass** das Verfahren ferner den folgenden Schritt umfasst:
- wenn der Pre-Crash-Sensor (26) bestimmt hat, dass das Fahrzeug einem unmittelbar bevorstehenden Aufprall ausgesetzt ist: reversibles Bewegen mindestens eines mit der ersten Führungsanordnung (20) in Berührung stehenden Gurtteils (28) des Gurts (18) in einer Richtung, die zumindest teilweise mit der Querrichtung (T) und/oder der Rückwärtsrichtung (B) zusammenfällt.

13. Verfahren nach Anspruch 12, wobei der Gurtteil (28) zumindest teilweise zur Quermittelebene (P_{T}) bewegt wird.

14. Verfahren nach Anspruch 12 oder 13, wobei das Verfahren ferner den folgenden Schritt umfasst:
- wenn der Pre-Crash-Sensor (26) bestimmt hat, dass das Fahrzeug in einen unmittelbar bevorstehenden Aufprall verwickelt sein wird: Betätigen des Sicherheitsgurtstraffers (24) zum reversiblen Spannen des Sicherheitsgurts (18).

## Revendications

1. Système de ceinture de sécurité (12) pour un siège de véhicule (10), ledit siège de véhicule (10) ayant une étendue verticale dans une direction verticale (V) et un plan médian transversal (P_{T}) qui, lorsqu'une personne occupe ledit siège de véhicule, s'étend verticalement entre les côtés gauche et droit de l'occupant, ledit système de ceinture de sécurité (12) comprenant une ceinture (18), un premier agencement de guidage (20) et un second agencement de guidage (22), ledit système de ceinture de sécurité (12) étant configuré de telle sorte que, lorsque ledit système de ceinture de sécurité (12) est monté avec ledit siège de véhicule (10), lesdits premier et second agencements de guidage (20, 22) soient situés sur le même côté dudit plan médian transversal (P_{T}) et ledit premier agencement de guidage (20) soit situé au-dessus dudit second agencement de guidage (22), ledit système (12) comprenant en outre une direction transversale (T) perpendiculaire audit plan médian transversal (P_{T}) et s'étendant à partir dudit premier agencement de guidage (20) vers ledit plan médian transversal (P_{T}), ledit système comprenant en outre une direction arrière (B) s'étendant à partir dudit premier agencement de guidage (20) dans une direction perpendiculaire à la fois à ladite direction verticale (V) et à ladite direction transversale (T) de telle sorte que ladite direction verticale (V), ladite direction transversale (T) et ladite direction arrière (B) forment ensemble un repère direct, ledit système (12) comprenant en outre un capteur d'anticipation d'accident (26) qui est conçu pour émettre un signal de situation d'accident indiquant que ledit véhicule se trouve dans une situation d'accident imminent, ledit système de ceinture de sécurité (12) comprenant en outre un tendeur de ceinture de sécurité réversible (24) conçu pour tendre de manière réversible ladite ceinture (18) en réaction à l'émission, par ledit capteur d'anticipation d'accident (26), dudit signal de situation d'accident, **caractérisé en ce que** ledit premier agencement de guidage (20) est configuré de telle manière qu'il permette de déplacer au moins une partie ceinture (28) de ladite ceinture (18), ladite partie ceinture (28) étant en contact avec ledit premier agencement de guidage (20), de façon réversible dans une direction coïncidant au moins partiellement avec ladite direction transversale (T) et/ou ladite direction arrière (B) lorsque ledit tendeur de ceinture de sécurité réversible (24) tend ladite ceinture (18).

2. Système de ceinture de sécurité (12) selon la revendication 1, ledit premier agencement de guidage (20) comprenant un premier point de guidage (30) et étant configuré de telle sorte que ledit premier point de guidage (30) soit déplacé conjointement avec une partie ceinture (28) de ladite ceinture (18) lorsque ledit tendeur de ceinture de sécurité (24) tend ladite ceinture (18).

3. Système de ceinture de sécurité (12) selon la revendication 2, ledit premier agencement de guidage (20) comprenant un moyen élastique (32) conçu pour permettre ledit déplacement dudit premier point de guidage (30) lorsque ledit tendeur de ceinture de sécurité réversible (24) tend ladite ceinture (18).

4. Système de ceinture de sécurité (12) selon la revendication 2 ou 3, ledit premier agencement de guidage (20) étant conçu pour pivoter pour réaliser ainsi ledit déplacement dudit premier point de guidage (30) lorsque ledit tendeur de ceinture de sécurité (24) tend ladite ceinture (18).

5. Système de ceinture de sécurité (12) selon la revendication 4, lorsqu'elle dépend de la revendication 3, ledit moyen élastique (32) comprenant un ressort de torsion.

6. Système de ceinture de sécurité (12) selon l'une quelconque des revendications précédentes, ledit premier agencement de guidage (20) comprenant une fente (42) ayant une étendue au moins dans une direction perpendiculaire audit plan médian transversal (P_{T}), ladite étendue étant égale à au moins 2 fois, de préférence 3 fois, la largeur de ladite ceinture (18).

7. Système de ceinture de sécurité (12) pour un siège de véhicule (10), ledit siège de véhicule (10) ayant une étendue verticale dans une direction verticale (V) et un plan médian transversal (P_{T}) qui, lorsqu'une personne occupe ledit siège de véhicule, s'étend verticalement entre les côtés gauche et droit de l'occupant, ledit système de ceinture de sécurité (12) comprenant une ceinture (18), un premier agencement de guidage (20) et un second agencement de guidage (22), ledit système de ceinture de sécurité (12) étant configuré de telle sorte que, lorsque ledit système de ceinture de sécurité (12) est monté avec ledit siège de véhicule (10), lesdits premier et second agencements de guidage (20, 22) soient situés sur le même côté dudit plan médian transversal (P_{T}) et ledit premier agencement de guidage (20) soit situé au-dessus dudit second agencement de guidage (22), ledit système (12) comprenant en outre une direction transversale (T) perpendiculaire audit plan médian transversal (P_{T}) et s'étendant à partir dudit premier agencement de guidage (20) vers ledit plan médian transversal (P_{T}), ledit système comprenant en outre une direction arrière (B) s'étendant à partir dudit premier agencement de guidage (20) dans une direction perpendiculaire à la fois à ladite direction verticale (V) et à ladite direction transversale (T) de telle sorte que ladite direction verticale (V), ladite direction transversale (T) et ladite direction arrière (B) forment ensemble un repère direct, ledit système (12) comprenant en outre un capteur d'anticipation d'accident (26) qui est conçu pour émettre un signal de situation d'accident indiquant que ledit véhicule se trouve dans une situation d'accident imminent, **caractérisé en ce que** ledit système de ceinture de sécurité (12) comprend un dispositif de commande de guidage (44) qui est conçu pour déplacer au moins une partie ceinture (28) de ladite ceinture (18), ladite partie ceinture (28) étant en contact avec ledit premier agencement de guidage (20), dans une direction coïncidant au moins partiellement avec ladite direction transversale (T) et/ou ladite direction arrière (B) en réaction à l'émission, par ledit capteur d'anticipation d'accident (26), dudit signal de situation d'accident.

8. Système de ceinture de sécurité (12) selon la revendication 7, ledit premier agencement de guidage (20) comprenant un premier point de guidage (30) et étant configuré de telle sorte que ledit premier point de guidage (30) soit déplacé conjointement avec une partie ceinture (28) de ladite ceinture (18) lorsque ledit tendeur de ceinture de sécurité (24) tend ladite ceinture (18).

9. Système de ceinture de sécurité (12) selon la revendication 8, ledit premier agencement de guidage (20) comprenant un levier (38), ledit premier point de guidage (30) étant raccordé audit levier (38) et ledit dispositif de commande de guidage (44) étant conçu pour faire pivoter ledit levier (38) en réaction à l'émission, par ledit capteur d'anticipation d'accident (26), dudit signal de situation d'accident.

10. Ensemble de siège de véhicule, comprenant un siège (10) et un système de ceinture de sécurité (12) selon l'une quelconque des revendications précédentes.

11. Véhicule, comprenant un ensemble de siège de véhicule selon la revendication 10 et/ou un système de ceinture de sécurité (12) selon l'une quelconque des revendications 1 à 9.

12. Procédé d'agencement d'une ceinture de sécurité (18) dans une configuration d'anticipation d'accident, ladite ceinture de sécurité (18) faisant partie d'un système de ceinture de sécurité (12) pour un siège (10), ledit siège (10) étant occupé par un occupant et étant situé dans ou sur un véhicule, ledit siège de véhicule (10) ayant une étendue verticale (V) et un plan médian transversal (P_{T}) qui s'étend verticalement entre les côtés gauche et droit de l'occupant, ledit système de ceinture de sécurité (12) comprenant un premier agencement de guidage (20) et un second agencement de guidage (22), ledit système de ceinture de sécurité (12) étant configuré de telle sorte que lesdits premier et second agencements de guidage (20, 22) soient situés sur le même côté dudit plan médian transversal (P_{T}) et ledit premier agencement de guidage (20) soit situé au-dessus dudit second agencement de guidage (22), ledit système (12) comprenant en outre une direction transversale (T) perpendiculaire audit plan médian transversal (P_{T}) et s'étendant à partir dudit premier agencement de guidage (20) vers ledit plan médian transversal (P_{T}), ledit système comprenant en outre une direction arrière (B) s'étendant à partir dudit premier agencement de guidage (20) dans une direction perpendiculaire à la fois à ladite direction verticale (V) et à ladite direction transversale (T) de telle sorte que ladite direction verticale (V), ladite direction transversale (T) et ladite direction arrière (B) forment ensemble un repère direct, ledit système (12) comprenant en outre un capteur d'anticipation d'accident (26), ledit procédé comprenant l'étape suivante :
- déterminer que ledit véhicule se trouve dans une situation de collision imminente au moyen dudit capteur d'anticipation d'accident (26) ; **caractérisé en ce que** le procédé comprend en outre l'étape suivante :
- lorsque ledit capteur d'anticipation d'accident (26) a déterminé que ledit véhicule se trouve dans une situation d'accident imminent : déplacer de manière réversible au moins une partie ceinture (28) de ladite ceinture (18), ladite partie ceinture (28) étant en contact avec ledit premier agencement de guidage (20), dans une direction coïncidant au moins partiellement avec ladite direction transversale (T) et/ou ladite direction arrière (B).

13. Procédé selon la revendication 12, ladite partie ceinture (28) étant déplacée au moins partiellement vers ledit plan médian transversal (P_{T}).

14. Procédé selon la revendication 12 ou 13, le procédé comprenant en outre l'étape suivante :
- lorsque ledit capteur d'anticipation d'accident (26) a déterminé que ledit véhicule va subir une collision imminente : commander ledit tendeur de ceinture de sécurité (24) afin de tendre de manière réversible ladite ceinture de sécurité (18).
